# EUROPÄISCHE PATENTSCHRIFT

(11) **EP 4 353 958 B1**
(45) Veröffentlichungstag und Bekanntmachung des Hinweises auf die Patenterteilung: **29.04.2026**
(21) Anmeldenummer: 23200891.2
(22) Anmeldetag: 29.09.2023
(51) Int. Cl.: F02C 7/262, F02C 9/40, F02C 3/22, F02C 3/24, F02C 7/22

(54) **ANTRIEBSSYSTEM FÜR EIN FLUGZEUG, FLUGZEUG MIT EINEM ANTRIEBSSYSTEM UND VERFAHREN ZUM BETREIBEN EINES FLUGZEUGS**
PROPULSION SYSTEM FOR AN AIRCRAFT, AIRCRAFT HAVING A PROPULSION SYSTEM, AND METHOD FOR OPERATING AN AIRCRAFT
SYSTÈME DE PROPULSION POUR AÉRONEF, AÉRONEF COMPRENANT UN SYSTÈME DE PROPULSION ET PROCÉDÉ DE FONCTIONNEMENT D'UN AÉRONEF

(30) Priorität: 13.10.2022 DE 102022210807
(43) Veröffentlichungstag der Anmeldung: 17.04.2024
(73) Patentinhaber: Rolls-Royce Deutschland Ltd & Co KG, 15827 Blankenfelde-Mahlow (DE)
(72) Erfinder: CLEMEN, Carsten, 15827 Blankenfelde-Mahlow (DE); DÖRR, Thomas, 15827 Blankenfelde-Mahlow (DE)

(56) Entgegenhaltungen:
- EP-A1- 4 095 368
- EP-A1- 4 123 145
- US-A- 5 069 031
- US-A1- 2016 076 461
- US-A1- 2022 178 544

## Beschreibung

Die Erfindung betrifft ein Antriebssystem für ein Flugzeug, das zum Betrieb mit einem flüssigen und einem gasförmigen Kraftstoff ausgebildet ist. Die Erfindung betrifft ferner ein Flugzeug mit einem Antriebssystem und ein Verfahren zum Betreiben des Flugzeugs.

Bei sogenannten "Dual-Fuel"-Antriebssystemen kann die Brennkammer und damit das Triebwerk sowohl mit einem flüssigen Kraftstoff, beispielsweise Kerosin oder vergleichbar, als auch mit einem gasförmigen Kraftstoff, beispielsweise Wasserstoff oder vergleichbar, betrieben werden. Der Betrieb kann insbesondere alternativ, ausschließlich mit dem flüssigen oder mit dem gasförmigen Kraftstoff, oder simultan, mit einem Gemisch aus den beiden Kraftstoffen, erfolgen.

Eine Gasturbinenanordnung mit einem Zuleitungssystem für ein "Dual-Fuel"-Triebwerk ist in der CN 112 709 639 A angegeben.

Eine Düsenvorrichtung für ein "Dual-Fuel"-Triebwerk ist in der US 2016/0 201 897 A1 angegeben. Weitere gattungsgemäße Gasturbinenanordnungen sind in US 5069031 A, EP 4123145 A1 und EP 4095368 A1 offenbart.

Dem "Dual-Fuel"- Prinzip liegt in der Regel zugrunde, dass die Brennkammer derart ausgelegt ist, dass sie in jeder Betriebssituation mit jedem der Kraftstoffe (alternativ oder simultan) betrieben werden kann, d. h. bei Start, Reiseflug, Landung und dergleichen, unabhängig von Außenbedingungen wie Druck, Temperatur und Höhe. Dies schließt ein, dass das Triebwerk sowohl mit dem gasförmigen als auch mit dem flüssigen Kraftstoff starten kann, ebenfalls unabhängig von den Außenbedingungen. Dies gilt auch für die Höhenzündung, die, in der Regel in einer Notsituation, in Höhe durchgeführt wird, z. B. auf Reiseflughöhe von beispielsweise 30.000 ft.

Um die sichere Höhenzündbarkeit der Brennkammer auch auf Reiseflughöhe mit dem flüssigen Kraftstoff zu gewährleisten, muss die Brennkammer ein gewisses Volumen aufweisen. Das erforderliche Volumen für die Höhenzündbarkeit der Brennkammer ist bei der Auslegung maßgeblich für das Brennkammer-Volumen und damit für die Aufenthaltszeit der Strömung innerhalb der Brennkammer. Eine hohe Aufenthaltszeit wiederum führt zu erhöhten NOₓ-(Stickoxid-)-Emissionen. Zudem erhöht ein großes Brennkammer-Volumen den Platzbedarf im Triebwerk, das Gewicht und die Kosten der Brennkammer, und damit des gesamten Triebwerks.

Der Erfindung liegt die Aufgabe zugrunde, ein Antriebssystem der eingangs genannten Art bereitzustellen, welches hinsichtlich der Emissionscharakteristik und Effizienz optimiert ist, sowie ein entsprechendes Flugzeug und ein Verfahren zum Betreiben des Flugzeugs.

Die Aufgabe wird für das Antriebssystem mit den Merkmalen des Anspruchs 1 gelöst. Für das Flugzeug wird die Aufgabe mit den Merkmalen des Anspruchs 10 und für das Verfahren mit den Merkmalen des Anspruchs 11 gelöst.

Vorteilhafte Varianten sind in den abhängigen Ansprüchen angegeben.

Bei dem Antriebssystem ist erfindungsgemäß vorgesehen, dass das Antriebssystem derart ausgebildet ist, dass im Falle einer Höhenzündung bei einem Höhenzündvorgang in dem zumindest einen Triebwerk, vorzugsweise in allen an dem Flugzeug vorhandenen ("Dual-Fuel"-)Triebwerken, ausschließlich gasförmiger Kraftstoff verwendbar oder verwendet ist. Eine Verwendung von flüssigem Kraftstoff ist nicht möglich.

Der Höhenzündvorgang beschreibt den Vorgang der Zündung und des Hochfahrens des jeweiligen Triebwerks auf eine bestimmte Betriebsbedingung, insbesondere auf Leerlauf, in großer Höhe, z. B. auf Reiseflughöhe von beispielsweise 30.000 ft, wobei in der Regel Außenbedingungen mit Temperaturen von bis zu -40 °C und 0,3 bar bis 0,4 bar Atmosphärendruck vorliegen. Die Dauer des Höhenzündvorgangs des jeweiligen Triebwerks (mit z. B. bis zu 100 klbf Volllast-Schub) mit Hochfahren auf Leerlauf beläuft sich typischerweise auf 60 bis 180 Sekunden.

Dabei ist insbesondere eine dem Antriebssystem zugeordnete Steuereinrichtung dazu konfiguriert, den Höhenzündvorgang ausschließlich mit dem gasförmigen Kraftstoff, nicht mit dem flüssigen Kraftstoff, zu steuern und/oder zu regeln.

Der gasförmige Kraftstoff, beispielsweise Wasserstoff, Methan, oder eine zumindest eines dieser Gase aufweisende Gas-Mischung, weist in der Regel eine sehr viel höhere Reaktivität (z. B. charakterisiert durch eine Zündverzugszeit oder eine Flammengeschwindigkeit) und einen deutlich größeren Zündbereich (z. B. charakterisiert durch die Zündgrenzen) auf als der flüssige Kraftstoff, insbesondere in Form von Kerosin. Daher kann die Verbrennung des gasförmigen Kraftstoffes auch in niedrigen Lastpunkten und im subatmosphärischen Bereich, wie in großer Höhe, wesentlich effizienter ablaufen. Im Gegensatz dazu ist der Wirkungsgrad der Brennkammer mit Kerosin bei Höhenzündbedingungen sehr gering (< 30 %), sodass große Mengen des Kerosins ungebrannt bleiben. So können durch die erfindungsgemäß vorgeschlagene Maßnahme vorteilhaft die Emissionen und die Effizienz des Antriebssystems insbesondere bei dem Höhenzündvorgang optimiert werden. Zudem kann das Brennraum-Volumen der Brennkammer auf eine Höhenzündung mit dem (vergleichsweise) hochreaktiven gasförmigen Kraftstoff ausgelegt werden und nicht auf eine Höhenzündung mit Kerosin. Dies ermöglicht ein geringeres Brennraum-Volumen und damit eine Brennkammer mit geringerer Baugröße, was sich positiv auf die NOₓ-Emissionen sowie Gewicht und Platzbedarf der Brennkammer, und damit der Effizienz des Triebwerks, auswirkt.

In dem Antriebssystem ist eine Mindestmenge an gasförmigem Kraftstoff bevorratbar oder bevorratet, die ausschließlich im Falle einer Höhenzündung verwendbar oder verwendet ist. Die Mindestmenge entspricht, vorzugsweise genau, der Menge, mit welcher in dem/den an dem Flugzeug vorhandenen (Dual-Fuel-)Triebwerk/en zumindest ein Höhenzündvorgang durchführbar oder durchgeführt ist. Möglich ist auch, dass die Mindestmenge auf eine andere definierte Anzahl von Höhenzündvorgängen, beispielsweise für zwei oder mehr Höhenzündungen, ausgelegt ist. Die erforderliche Menge pro Triebwerk entspricht einer Teil-Mindestmenge. Die Summe aller Teil-Mindestmengen ergibt die Mindestmenge. Die Mindestmenge ist bzw. wird vorzugsweise auch dann bevorratet, wenn ansonsten bei dem entsprechenden Flug kein Betrieb mit dem gasförmigen Kraftstoff geplant ist.

Die Bevorratung der Mindestmenge ist z. B. steuerungstechnisch, mittels Erhalt eines Mindest-Füllstands in dem (Haupt-) Tankraum für gasförmigen Kraftstoff innerhalb des Antriebssystems, der den gasförmigen Kraftstoff für den übrigen Flugbetrieb beinhaltet, möglich.

Zur Bevorratung der Mindestmenge ist zumindest ein Zusatz-Tankraum vorhanden, welcher (im Falle der Höhenzündung) vorzugsweise über eine separate Zusatz-Kraftstoffleitung mit der Brennkammer in Strömungsverbindung bringbar oder gebracht ist. Der Zusatz-Tankraum ist insbesondere separat von den anderen (Haupt-) Tankräumen des Antriebssystems angeordnet. Innerhalb der Zusatz-Kraftstoffleitung sind vorzugsweise ein separates Zusatz-Ventil und/oder eine Zusatz-Druckminderungseinrichtung angeordnet. Die Zusatz-Kraftstoffleitung kann an eine (Haupt-)Kraftstoffleitung des Kraftstoffsystems innerhalb des Antriebssystems angeschlossen sein. Durch das Vorhandensein des Zusatz-Tankraums und gegebenenfalls der separaten Zusatz-Kraftstoffleitung wird sicherheitstechnisch vorteilhaft eine Redundanz innerhalb des Kraftstoff-Systems erreicht, sowie eine einfache Steuerbarkeit in Notsituationen. Die Gefahr einer ungeplanten Entnahme des Mindestvolumens für einen anderen Zweck als die Höhenzündung, mit übermäßiger Entleerung des (Haupt-)Tankraums, entfällt. Zudem kann durch die vergleichsweise kompakte Ausbildung der Zusatz-Tankraum vorteilhaft angeordnet sein und/oder unabhängig von dem (Haupt-)Tankraum für gasförmigen Kraftstoff für den übrigen Flugbetrieb befüllt sein.

Eine definierte und platzsparende Bevorratung der Mindestmenge wird ermöglicht, wenn pro vorhandenem (und bei der Höhenzündung zu zündendem) Triebwerk zumindest ein Zusatz-Tankraum vorhanden ist. Vorzugsweise beinhaltet jeder Zusatz-Tankraum die Teil-Mindestmenge zur Höhenzündung des jeweiligen Triebwerks, dem der Zusatz-Tankraum zugeordnet ist.

Eine vorteilhafte Anordnung ist möglich, wenn der Zusatz-Tankraum an dem jeweiligen Triebwerk, welchem der Zusatz-Tankraum (zur Bevorratung der Teil-Mindestmenge für das entsprechende Triebwerk) zugeordnet ist, oder an einem anderen Ort innerhalb des Flugzeugs angeordnet ist. Vorzugsweise ist somit der Zusatz-Tankraum separat von dem (Haupt-) Tankraum zur Bevorratung der übrigen Menge an gasförmigem Kraftstoff angeordnet. "An dem Triebwerk" bedeutet insbesondere innerhalb der äußeren Triebwerksverkleidung.

Vorzugsweise ist der Zusatz-Tankraum in einem druckfesten Zusatz-Tankbehälter ausgebildet. Der maximale Fülldruck kann beispielsweise zwischen 300 bar und 700 bar betragen. Für eine kompakte Ausbildung ist der Drucktank vorzugsweise nicht thermisch isoliert.

In einer kompakten und/oder gewichtsoptimierten Ausbildung ist der Zusatz-Tankbehälter bestehend aus Metall, insbesondere Edelstahl, und/oder umfassend Metall ausgebildet oder bestehend aus, insbesondere (z. B. mit Glasfaser) verstärktem, Kunststoff, z. B. Polyamid, und/oder umfassend Kunststoff ausgebildet.

Ebenfalls zu einer kompakten Ausbildung trägt bei, wenn das Volumen des, ggf. jeweiligen, Zusatz-Tankraums derart ausgelegt ist, dass zumindest, vorzugsweise genau, eine Teil-Mindestmenge, zur Durchführung, vorzugsweise genau, zumindest eines Höhenzündvorgangs (oder, vorzugsweise genau, zweier oder mehr Höhenzündvorgänge) in dem zugeordneten Triebwerk, bevorratbar oder bevorratet ist. Das Volumen richtet sich somit nach der Charakteristik des zugeordneten Triebwerks, insbesondere dessen Kraftstoffverbrauch bei dem Höhenzündvorgang. Aufgrund der durch die bedarfsorientierte Auslegung erhaltenen geringen Größe des Zusatz-Tankraums ist, bei entsprechender Brennkammerauslegung mit reduziertem Brennraumvolumen, eine vorteilhafte Gesamtgewichtsersparnis möglich.

Für eine vorteilhafte Größen- und Gewichtsreduktion ist das Brennraum-Volumen innerhalb der Brennkammer vorzugsweise für die Höhenzündung mit dem gasförmigen Kraftstoff ausgelegt, wobei das Brennraum-Volumen zumindest 10 % geringer, vorzugsweise zumindest 20 % oder zumindest 30 % geringer, z. B. um bis zu 50 % geringer, ausgebildet ist als bei einer Auslegung eines gleichartigen Triebwerks (mit gleichen Kenngrößen, beispielsweise dem Schub) für die Höhenzündung mit dem flüssigen Kraftstoff.

Vorzugsweise ist das Antriebssystem zum Betrieb mit einem kerosinbasierten und/oder kerosinverwandten Kraftstoff als flüssigem Kraftstoff und/oder zum Betrieb mit Wasserstoff und/oder Methan oder einem zumindest eines dieser Gase aufweisenden Gasgemisch als gasförmigem Kraftstoff ausgelegt.

Bei dem Verfahren ist erfindungsgemäß vorgesehen, dass im Falle einer Höhenzündung bei einem Höhenzündvorgang in dem zumindest einen Triebwerk ausschließlich gasförmiger Kraftstoff verwendet wird.

Dabei wird für den Höhenzündvorgang eine in dem Antriebssystem bevorratete Mindestmenge an gasförmigem Kraftstoff verwendet.

Im Falle der Höhenzündung wird ein Zusatz-Ventil in einer Zusatz-Kraftstoffleitung geschaltet, über welche eine für den Höhenzündvorgang des entsprechenden Triebwerks erforderliche Teil-Mindestmenge an gasförmigem Kraftstoff aus einem Zusatz-Tankraum an die Brennkammer geleitet wird, wobei insbesondere der Druck des Kraftstoffes über eine zwischengeschaltete Zusatz-Druckminderungseinrichtung auf ein für die Höhenzündung erforderliches Druckniveau, z. B. bis zu 15 bar Überdruck, gedrosselt wird.

Weitere Ausführungsvarianten des Verfahrens sind in Zusammenhang mit den Ausbildungsvarianten des Antriebssystems sinngemäß angegeben.

Nachfolgend wird die Erfindung anhand von Ausführungsbeispielen unter Bezugnahme auf die Zeichnungen näher erläutert. Es zeigen:
- Fig. 1: ein Flugzeug mit einem Antriebssystem, das zum Betrieb mit einem flüssigen und einem gasförmigen Kraftstoff ausgebildet ist, gemäß dem Stand der Technik in schematischer Darstellung und
- Fig. 2: ein erfindungsgemäßes Flugzeug mit einem Antriebssystem umfassend einen separaten Zusatz-Tankraum zur Bevorratung von gasförmigem Kraftstoff für eine Höhenzündung in schematischer Darstellung.

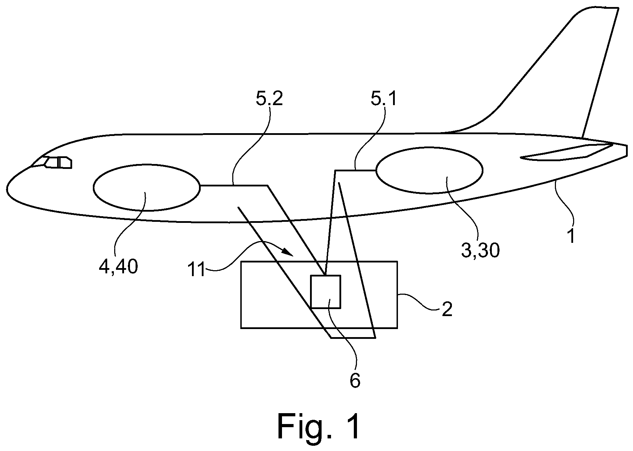

Fig. 1 zeigt in einer schematischen Darstellung ein Flugzeug 1 mit einem Antriebssystem 11, das zum Betrieb mit einem flüssigen Kraftstoff und einem gasförmigen Kraftstoff ausgebildet ist, wie es aus dem Stand der Technik allgemein bekannt ist.

Bei dem flüssigen Kraftstoff handelt es sich insbesondere um einen kerosinbasierten oder kerosinverwandten (d. h. mit Kerosin vergleichbaren) Kraftstoff. Bei dem gasförmigen Kraftstoff handelt es sich insbesondere um Wasserstoff und/oder Methan oder ein anderes hochreaktiven Gas, oder ein zumindest eines dieser Gase aufweisendes Gasgemisch.

Das Antriebssystem 11 weist für den gasförmigen Kraftstoff einen Tankraum 3 in einem Tankbehälter 30 auf, der über eine Kraftstoffleitung 5.1 mit einer Brennkammer 6 eines Triebwerks 2 des Antriebssystems 11 zu dessen Versorgung im Betrieb mit dem gasförmigen Kraftstoff in Strömungsverbindung steht. Für den flüssigen Kraftstoff weist das Antriebssystem 11 einen Tankraum 4 in einem Tankbehälter 40 auf, der über eine Kraftstoffleitung 5.2 mit der Brennkammer 6 des Triebwerks 2 zu dessen Versorgung im Betrieb mit dem flüssigen Kraftstoff in Strömungsverbindung steht.

Das Flugzeug 1 kann sowohl alternativ mit einem der beiden Kraftstoffe betrieben werden, d. h. ausschließlich mit dem flüssigen oder dem gasförmigen Kraftstoff, als auch simultan, mit einem Gemisch aus den beiden Kraftstoffen.

Zu diesem Zweck ist zumindest ein, bzw. sind in der Regel alle in dem Antriebssystem 11 des Flugzeugs vorhandenen Triebwerke 2, als sogenanntes "Dual-fuel"-Triebwerk 2 ausgebildet. Dabei ist eine Gasturbinenanordnung mit der Brennkammer 6 des jeweiligen Triebwerks 2 so ausgelegt, dass sie in jeder Betriebssituation mit jedem der beiden Kraftstoffe betrieben werden kann, d. h. bei Start, Reiseflug, Landung etc., unabhängig von den Außenbedingungen wie Druck, Temperatur und Höhe. Dies schließt auch ein, dass das Triebwerk 2 sowohl mit dem gasförmigen als auch mit dem flüssigen Kraftstoff starten kann, ebenfalls unabhängig von den Außenbedingungen, also auch auf Höhe (z. B. 30.000 ft), d. h. bei einer Höhenzündung.

Um eine sichere Höhenzündung der Brennkammer 6 auf z. B. 30.000 ft Höhe mit dem flüssigen Kraftstoff zu gewährleisten, muss ein Brennraum der Brennkammer 6 ein vergleichsweise großes Volumen aufweisen. Um einen sicheren Flugbetrieb zu gewährleisten, wird die Brennkammer 6 auf den Notfall der Höhenzündung ausgelegt, nach welchem sich das Brennraum-Volumen richtet. Entsprechend weist die Brennkammer 6 eine vergleichsweise große Baugröße mit einem großen Brennraum-Volumen auf, welches sich nachteilig auf die NOₓ-Emissionen, den Platzbedarf im Triebwerk 2, das Gewicht und die Kosten der Brennkammer 6 und damit des gesamten Triebwerks 2 auswirkt. Zudem ist der Wirkungsgrad der Brennkammer 6 bei Zündung mit Kerosin als flüssigem Kraftstoff bei Höhenzündungsbedingungen sehr niedrig (kleiner 30 %), sodass große Mengen an Kerosin beim Startvorgang des Triebwerks unverbrannt bleiben.

Zugunsten des Emissionsniveaus und der Verbrennungseffizienz wird erfindungsgemäß vorgeschlagen, im Falle einer Höhenzündung die Brennkammer 6 ausschließlich mit dem gasförmigen Kraftstoff zu zünden. Der gasförmige Kraftstoff weist in der Regel eine sehr viel höhere Reaktivität (z. B. charakterisiert durch eine Zündverzugszeit oder eine Flammengeschwindigkeit) und einen deutlich größeren Zündbereich (z. B. charakterisiert durch die Zündgrenzen) auf als der flüssige Kraftstoff, sodass die Verbrennung des gasförmigen Kraftstoffes auch in niedrigen Lastpunkten und im subatmosphärischen Bereich, wie in großer Höhe, wesentlich effizienter ablaufen kann. Zudem kann vorteilhaft das Brennraum-Volumen der Brennkammer 6 auf eine Höhenzündung mit Wasserstoff oder einem anderen, in der Regel (vergleichsweise) hochreaktiven Kraftstoff ausgelegt werden und nicht auf eine Höhenzündung mit Kerosin, was ein geringeres Brennraum-Volumen und damit eine Brennkammer 6 mit geringerer Baugröße ermöglicht.

Dabei ist es sicherheitstechnisch äußerst zweckmäßig sicherzustellen, dass zu jeder Zeit für jedes bei der Höhenzündung zu zündende Triebwerk 2 eine ausreichende Menge an gasförmigem Kraftstoff vorhanden ist, unabhängig davon, wie viel gasförmiger Kraftstoff für den weiteren Flug noch zur Verfügung steht.

Die ausreichende Menge wird nachfolgend als Mindestmenge bezeichnet. Die Mindestmenge bildet die zur Zündung aller bei einem Höhenzündvorgang (oder mehreren Höhenzündvorgängen) zu zündenden Triebwerke 2 benötigte Menge an gasförmigem Kraftstoff. Zur Höhenzündung eines einzelnen Triebwerks 2 ist hierbei eine entsprechende Teil-Mindestmenge erforderlich.

Die Teil-Mindestmenge für einen Höhenzündvorgang pro Triebwerk 2 ist diejenige Menge, die benötigt wird, um eine Zündung und ein Hochfahren des Triebwerks 2 auf Leerlauf zu erreichen, und variiert je nach Größe, insbesondere Schub, des Triebwerks 2 und der Dauer des Höhenzündvorgangs. Typischerweise dauert ein Höhenzündvorgang (Zündung und Hochfahren des Triebwerks 2 auf Leerlauf) z. B. 60 Sekunden bis 180 Sekunden für das Hochfahren eines Triebwerks 2 (mit z. B. bis zu bis 100 klbf Vollast-Schub).

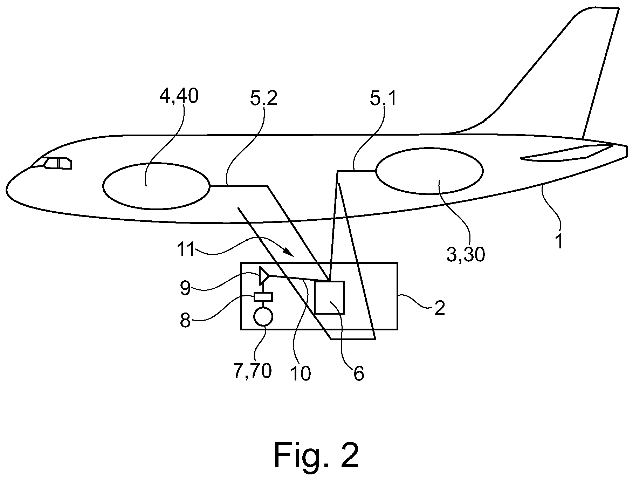

Fig. 2 zeigt eine erfindungsgemäße Ausbildung des Flugzeugs 1 mit einem Antriebssystem 11, das derart ausgebildet ist, dass die Mindestmenge an gasförmigem Kraftstoff bevorratet wird, die ausschließlich im Falle einer Höhenzündung verwendet wird.

In Fig. 2 ist gemäß einer bevorzugten Ausbildungsvariante zumindest ein Zusatz-Tankraum 7 vorhanden, in welchem oder welchen die Mindestmenge bevorratet ist. Vorzugsweise ist pro bei der Höhenzündung zu zündendem Triebwerk 2 zumindest ein Zusatz-Tankraum 7 vorhanden. Der jeweilige Zusatz-Tankraum 7 bevorratet jeweils die Teil-Mindestmenge, welche für zumindest einen Höhenzündvorgang des entsprechenden Triebwerks 2 ausreicht.

Das Brennraum-Volumen der Brennkammer 6 ist für die Höhenzündung mit dem gasförmigen Kraftstoff, nicht für den flüssigen Kraftstoff, ausgelegt und weist somit ein z. B. um zumindest 10 % oder 20 %, z. B. um bis zu 50 % geringeres Brennraum-Volumen auf, als eine für das gleichartige Triebwerk 2 für die Höhenzündung mit dem flüssigen Kraftstoff ausgelegte Brennkammer 6.

Der Zusatz-Tankraum 7 kann an dem jeweiligen Triebwerk 2, dem der Zusatz-Tankraum zugeordnet ist, angeordnet sein (insbesondere innerhalb der äußeren Triebwerksverkleidung), oder an einem anderen Ort innerhalb des Flugzeugs 1. Der Zusatz-Tankraum 7 ist vorzugsweise separat von dem Tankraum 3 und dem Tankraum 4 angeordnet.

Der Zusatz-Tankraum 7 ist über eine separate Zusatz-Kraftstoffleitung 10 mit der Brennkammer 6 verbunden. In der Zusatz-Kraftstoffleitung 10 sind ein Zusatz-Ventil 8 und eine Zusatz-Druckminderungseinrichtung 9 angeordnet.

Im Falle einer Höhenzündung wird das Zusatz-Ventil 8 geschaltet und damit die Strömungsverbindung zwischen dem Zusatz-Tankraum 7 und der Brennkammer 6 mittels der Zusatz-Kraftstoffleitung 10 hergestellt. Über die Zusatz-Kraftstoffleitung 10 wird der gasförmige Kraftstoff an die Brennkammer 6 geleitet, wobei der Druck des gasförmigen Kraftstoffes über die Zusatz-Druckminderungseinrichtung 9 auf ein für die Entzündung erforderliches Druckniveau von beispielsweise bis zu 15 bar Überdruck gedrosselt wird.

Bei dem in Fig. 2 gezeigten Beispiel ist der Zusatz-Tankraum 7 in einem druckfesten Zusatz-Tankbehälter 70 ausgebildet, der, separat von den Tankbehältern 30 und 40, hier beispielhaft an dem Triebwerk 2 angeordnet ist. Bei Wasserstoff als gasförmigem Kraftstoff ist der Zusatz-Tankbehälter 70 beispielsweise auf einen maximalen Speicherdruck zwischen 300 bar und 700 bar ausgelegt. Der Zusatz-Tankbehälter 70 besteht aus Metall, insbesondere Edelstahl, und/oder ist Metall umfassend ausgebildet. Alternativ besteht der Zusatz-Tankbehälter 70 aus insbesondere z. B. mit Glasfaser verstärktem Kunststoff, z. B. Polyamid, und/oder ist Kunststoff umfassend ausgebildet.

Das Volumen des Zusatz-Tankraums 7 ist derart ausgelegt, dass die Teil-Mindestmenge für zumindest einen Höhenzündvorgang bevorratet werden kann. Somit richtet sich das Volumen des Zusatz-Tankraums 7 nach der Charakteristik des Triebwerks 2, insbesondere dessen Kraftstoffverbrauch bei dem Höhenzündvorgang.

Beispielhaft liegt die erforderliche Teil-Mindestmenge an Wasserstoff bei einem Höhenzündvorgang zum Zünden und Hochfahren des Triebwerks 2 (Volllast-Schub ca. 20 klbf) auf Leerlauf ("flight idle") innerhalb von 90 Sekunden bei ca. 0,8 kg. Dies entspricht einem Wasserstoff-Volumen von etwa 20 I bei einem Speicherdruck von 700 bar. Der Zusatz-Tankraum 7 wird somit auf ein Volumen von rund 20 I ausgelegt, wobei er beispielsweise einen Durchmesser von rund 20 cm und eine Länge von rund 70 cm aufweisen kann.

Für ein größeres Triebwerk kann beispielsweise der Zusatz-Tankraum 7 größer ausgelegt sein oder es können mehrere Zusatz-Tankräume 7 gleicher Größe vorhanden sein (in Fig. 2 nicht gezeigt).

Die Größe des Zusatz-Tankraums 7 bzw. aller benötigten Zusatz-Tankräume 7 ist/sind dabei derart gering, dass bei Auslegung der Brennkammer 6 mit dem reduzierten Brennraum-Volumen in Summe eine Gewichts-Gesamtersparnis möglich ist.

Die Bevorratung der Mindestmenge ist auch steuerungstechnisch mittels Erhalt eines Mindest-Füllstands in dem Tankraum 3 möglich, wobei kein Zusatz-Tankraum 7 vorhanden ist (in Fig. 2 nicht gezeigt).

Mittels der modifizierten Ausbildung des Antriebssystems 11 betreffend die Höhenzündbarkeit nicht für beide Kraftstoffe, sondern lediglich mit dem gasförmigen Kraftstoff, ist es möglich, die Brennkammer 6 mit deutlich reduziertem Volumen auszulegen. Dies geht mit einer sinkenden Aufenthaltszeit des Luft-Kraftstoff-Gemisches innerhalb der Brennkammer 6 und somit einer Reduktion der NOₓ-Emissionen einher. Zudem können das Triebwerksgewicht und damit verbundene Kosten reduziert werden.

### Bezugszeichenliste

- 1: Luftfahrzeug
- 2: Triebwerk
- 3: Tankraum
- 30: Tankbehälter
- 4: Tankraum
- 40: Tankbehälter
- 5.1: Kraftstoffleitung
- 5.2: Kraftstoffleitung
- 6: Brennkammer
- 7: Zusatz-Tankraum
- 70: Zusatz-Tankbehälter
- 8: Zusatz-Ventil
- 9: Zusatz-Druckminderungseinrichtung
- 10: Zusatz-Kraftstoffleitung
- 11: Antriebssystem

## Patentansprüche

1. Antriebssystem (11) für ein Flugzeug (1), das zum Betrieb mit einem flüssigen und einem gasförmigen Kraftstoff ausgebildet ist, umfassend
- zumindest ein Triebwerk (2) mit einer Brennkammer (6) zum Betrieb mit dem flüssigen und/oder dem gasförmigen Kraftstoff und
- je Kraftstoff zumindest einen separaten Tankraum (3, 4), der jeweils über eine Kraftstoffleitung (5.1, 5.2) mit der Brennkammer (6) zu deren Versorgung mit dem entsprechenden Kraftstoff in Strömungsverbindung bringbar oder gebracht ist,
- dass im Falle einer Höhenzündung bei einem Höhenzündvorgang in dem zumindest einen Triebwerk (2) ausschließlich gasförmiger Kraftstoff verwendbar oder verwendet ist,
- eine Mindestmenge an gasförmigem Kraftstoff bevorratbar oder bevorratet ist, die ausschließlich im Falle einer Höhenzündung verwendbar oder verwendet ist,
**dadurch gekennzeichnet,**
- **dass** zur Bevorratung der Mindestmenge zumindest ein Zusatz-Tankraum (7) vorhanden ist.

2. Antriebssystem (11) nach Anspruch 1, **dadurch gekennzeichnet,**
**dass** der Zusatz-Tankraum (7) über eine separate Zusatz-Kraftstoffleitung (10) mit der Brennkammer (6) in Strömungsverbindung bringbar oder gebracht ist.

3. Antriebssystem (11) nach Anspruch 1 oder 2,
**dadurch gekennzeichnet,**
**dass** pro vorhandenem Triebwerk (2) zumindest ein Zusatz-Tankraum (7) vorhanden ist.

4. Antriebssystem (11) nach einem der vorhergehenden Ansprüche,
**dadurch gekennzeichnet,**
**dass** der Zusatz-Tankraum (7) an dem jeweiligen Triebwerk (2), welchem der Zusatz-Tankraum (7) zugeordnet ist, oder an einem anderen Ort innerhalb des Flugzeugs (1) angeordnet ist.

5. Antriebssystem (11) nach einem der vorhergehenden Ansprüche,
**dadurch gekennzeichnet,**
**dass** der Zusatz-Tankraum (7) in einem druckfesten Zusatz-Tankbehälter (70) ausgebildet ist.

6. Antriebssystem (11) nach Anspruch 5,
**dadurch gekennzeichnet,**
**dass** der Zusatz-Tankbehälter (70)
bestehend aus Metall, insbesondere Edelstahl, und/oder umfassend Metall ausgebildet ist oder
bestehend aus, insbesondere verstärktem, Kunststoff, z. B. Polyamid, und/oder umfassend Kunststoff ausgebildet ist.

7. Antriebssystem (11) nach einem der vorhergehenden Ansprüche,
**dadurch gekennzeichnet,**
**dass** das Volumen des, ggf. jeweiligen, Zusatz-Tankraums (7) derart ausgelegt ist, dass zumindest, vorzugsweise genau, eine Teil-Mindestmenge, zur Durchführung, vorzugsweise genau, zumindest eines Höhenzündvorgangs in dem zugeordneten Triebwerk (2), bevorratbar oder bevorratet ist.

8. Antriebssystem (11) nach einem der vorhergehenden Ansprüche,
**dadurch gekennzeichnet,**
**dass** das Brennraum-Volumen innerhalb der Brennkammer (6) für die Höhenzündung mit dem gasförmigen Kraftstoff ausgelegt ist, wobei das Brennraum-Volumen zumindest 10 % geringer, vorzugsweise zumindest 20 % oder zumindest 30 % geringer, z. B. um bis zu 50 % geringer, ausgebildet ist als bei einer Auslegung eines gleichartigen Triebwerks (2) für die Höhenzündung mit dem flüssigen Kraftstoff.

9. Antriebssystem (11) nach einem der vorhergehenden Ansprüche,
**dadurch gekennzeichnet,**
**dass** das Antriebssystem (11)
zum Betrieb mit einem kerosinbasierten und/oder kerosinverwandten Kraftstoff als flüssigem Kraftstoff und/oder
zum Betrieb mit Wasserstoff und/oder Methan oder einem zumindest eines dieser Gase aufweisenden Gasgemisch als gasförmigem Kraftstoff ausgelegt ist.

10. Flugzeug mit einem Antriebssystem (11) nach einem der vorhergehenden Ansprüche.

11. Verfahren zum Betreiben eines Flugzeuges (1), das mittels eines Antriebssystems alternativ oder simultan mit einem flüssigen und einem gasförmigen Kraftstoff betrieben werden kann, bei dem zumindest eine Brennkammer (6) zumindest eines Triebwerkes (2) mit dem/den verwendeten Kraftstoff/en über jeweils eine Kraftstoffleitung (5.1, 5.2) aus jeweils einem separaten Tankraum (3, 4) versorgt wird,
**dadurch gekennzeichnet,**
**dass** im Falle einer Höhenzündung bei einem Höhenzündvorgang in dem zumindest einen Triebwerk (2) ausschließlich gasförmiger Kraftstoff verwendet wird, wobei
für den Höhenzündvorgang eine in dem Antriebssystem (11) bevorratete Mindestmenge an gasförmigem Kraftstoff verwendet wird, **dadurch gekennzeichnet, dass** im Falle der Höhenzündung ein Zusatz-Ventil (8) in einer Zusatz-Kraftstoffleitung (10) geschaltet wird, über welche eine für den Höhenzündvorgang des entsprechenden Triebwerks (2) erforderliche Teil-Mindestmenge an gasförmigem Kraftstoff aus einem Zusatz-Tankraum (7) an die Brennkammer (6) geleitet wird.

12. Verfahren nach Anspruch 11, **dadurch gekennzeichnet, dass**
der Druck des Kraftstoffes über eine zwischengeschaltete Zusatz-Druckminderungseinrichtung (9) auf ein für die Höhenzündung erforderliches Druckniveau gedrosselt wird.

## Claims

1. Propulsion system (11) for an aircraft (1), configured for operation with a liquid and a gaseous fuel, comprising
- at least one engine (2) with a combustion chamber (6) for operation with the liquid and/or gaseous fuel and
- at least one separate tank space (3, 4) for each fuel, which can be brought or is brought into a flow connection with the combustion chamber (6) via a fuel line (5.1, 5.2) to supply it with the corresponding fuel,
- means to ensure that, in the event of a high-altitude ignition, exclusively gaseous fuel can be used or is used in a high-altitude ignition process in the at least one engine (2),
- means wherein a minimum quantity of gaseous fuel can be stored or is stored that can be used or is used exclusively in the event of a high-altitude ignition,
**characterised in that**
- at least one additional tank space (7) is available for storing the minimum quantity.

2. Propulsion system (11) according to claim 1, **characterised in that** the additional tank space (7) can be brought or is brought into a flow connection with the combustion chamber (6) via a separate additional fuel line (10).

3. Propulsion system (11) according to claim 1 or 2, **characterised in that** at least one additional tank space (7) is available for each available engine (2).

4. Propulsion system (11) according to any of the preceding claims,
**characterised in that**
the additional tank space (7) is arranged on the respective engine (2) to which the additional tank space (7) is assigned, or at another location within the aircraft (1).

5. Propulsion system (11) according to any of the preceding claims,
**characterised in that**
the additional tank space (7) is configured in a pressure-tight additional tank container (70).

6. Propulsion system (11) according to claim 5,
**characterised in that**
the additional tank container (70) is configured from metal, in particular stainless steel, and/or comprises metal, or is configured from plastic, in particular reinforced plastic, e.g.
polyamide, and/or comprises plastic.

7. Propulsion system (11) according to any of the preceding claims,
**characterised in that**
the volume of the, optionally respective, additional tank space (7) is designed in such a way that at least, preferably precisely, one partial minimum quantity can be stored or is stored for carrying out, preferably precisely, at least one high-altitude ignition process in the assigned engine (2).

8. Propulsion system (11) according to any of the preceding claims,
**characterised in that**
the combustion chamber volume within the combustion chamber (6) is designed for high-altitude ignition with the gaseous fuel, the combustion chamber volume being at least 10% smaller, preferably at least 20% or at least 30% smaller, e.g. by up to 50% smaller, than in the case of a design of a similar engine (2) for high-altitude ignition with the liquid fuel.

9. Propulsion system (11) according to any of the preceding claims,
**characterised in that** the propulsion system (11)
is designed for operation with a kerosene-based and/or kerosene-related fuel as a liquid fuel and/or for operation with hydrogen and/or methane or a gas mixture having at least one of these gases as a gaseous fuel.

10. Aircraft with a propulsion system (11) according to any of the preceding claims.

11. Method for operating an aircraft (1), which can be operated alternatively or simultaneously with a liquid and a gaseous fuel by means of a propulsion system, in which at least one combustion chamber (6) of at least one engine (2) is supplied with the fuel(s) used via a fuel line (5.1, 5.2) from a separate tank space (3, 4),
**characterised in that**
in the event of a high-altitude ignition, exclusively gaseous fuel is used in a high-altitude ignition process in the at least one engine (2), a minimum quantity of gaseous fuel stored in the propulsion system (11) being used for the high-altitude ignition process, **characterised in that**, in the event of the high-altitude ignition, an additional valve (8) is switched in an additional fuel line (10), via which a partial minimum quantity of gaseous fuel required for the high-altitude ignition process of the corresponding engine (2) is channelled from an additional tank space (7) to the combustion chamber (6).

12. Method according to claim 11, **characterised in that**
the pressure of the fuel is throttled to a pressure level required for the high-altitude ignition via an intermediate additional pressure reduction device (9).

## Revendications

1. Système de propulsion (11) pour aéronef (1) conçu pour fonctionner avec un carburant liquide et un carburant gazeux, comprenant
- au moins un moteur (2) avec une chambre de combustion (6) pour le fonctionnement avec le carburant liquide et/ou gazeux et
- pour chaque carburant, au moins un compartiment de réservoir séparé (3, 4), qui peut être mis ou est mis en communication fluidique avec la chambre de combustion (6) par l'intermédiaire d'une conduite de carburant (5.1, 5.2) pour son alimentation avec le carburant correspondant,
- en cas d'allumage en altitude lors d'une procédure d'allumage en altitude dans ledit au moins un moteur (2), seul du carburant gazeux peut être utilisé ou est utilisé,
- une quantité minimale de carburant gazeux peut être stockée ou est stockée, ladite quantité étant exclusivement utilisable ou utilisée en cas d'allumage en altitude,
**caractérisé en ce que**
- au moins un compartiment de réservoir supplémentaire (7) est prévu pour le stockage de la quantité minimale.

2. Système de propulsion (11) selon la revendication 1, **caractérisé en ce que** le compartiment de réservoir supplémentaire (7) peut être mis ou est mis en communication fluidique avec la chambre de combustion (6) par l'intermédiaire d'une conduite de carburant supplémentaire séparée (10).

3. Système de propulsion (11) selon l'une des revendications 1 ou 2, **caractérisé en ce que**
pour chaque moteur (2) présent, au moins un compartiment de réservoir supplémentaire (7) est prévu.

4. Système de propulsion (11) selon l'une quelconque des revendications précédentes,
**caractérisé en ce que**
le compartiment de réservoir supplémentaire (7) est disposé sur le moteur (2) respectif auquel ledit compartiment de réservoir supplémentaire (7) est affecté ou à un autre endroit à l'intérieur de l'aéronef (1).

5. Système de propulsion (11) selon l'une quelconque des revendications précédentes,
**caractérisé en ce que**
le compartiment de réservoir supplémentaire (7) est réalisé dans un réservoir supplémentaire résistant à la pression (70).

6. Système de propulsion (11) selon la revendication 5,
**caractérisé en ce que**
le réservoir supplémentaire (70) est réalisé en métal, en particulier en acier inoxydable, et/ou comprend du métal, ou est réalisé en plastique, en particulier en plastique renforcé, par exemple en polyamide, et/ou comprend du plastique.

7. Système de propulsion (11) selon l'une quelconque des revendications précédentes,
**caractérisé en ce que**
le volume du compartiment de réservoir supplémentaire (7), le cas échéant, est conçu de manière à ce qu'au moins, de préférence exactement, une fraction de la quantité minimale puisse être stockée ou soit stockée pour la réalisation, de préférence exactement, d'au moins une procédure d'allumage en altitude dans le moteur (2) associé.

8. Système de propulsion (11) selon l'une quelconque des revendications précédentes,
**caractérisé en ce que**
le volume de l'espace de combustion à l'intérieur de la chambre de combustion (6) est conçu pour l'allumage en altitude avec le carburant gazeux, ledit volume de l'espace de combustion étant au moins inférieur de 10 %, de préférence au moins inférieur de 20 % ou au moins inférieur de 30 %, par exemple jusqu'à 50 % inférieur, à celui d'un moteur (2) de même type conçu pour l'allumage en altitude avec le carburant liquide.

9. Système de propulsion (11) selon l'une quelconque des revendications précédentes,
**caractérisé en ce que** ledit système de propulsion (11)
est conçu pour fonctionner avec un carburant à base de kérosène et/ou apparenté au kérosène en tant que carburant liquide et/ou pour fonctionner avec de l'hydrogène et/ou du méthane ou un mélange gazeux contenant au moins l'un de ces gaz en tant que carburant gazeux.

10. Aéronef comprenant un système de propulsion (11) selon l'une quelconque des revendications précédentes.

11. Procédé de fonctionnement d'un aéronef (1) qui peut fonctionner alternativement ou simultanément avec un carburant liquide et un carburant gazeux au moyen d'un système de propulsion, dans lequel au moins une chambre de combustion (6) d'au moins un moteur (2) est alimentée avec le ou les carburants utilisés par l'intermédiaire d'une conduite de carburant (5.1, 5.2) à partir d'un compartiment de réservoir séparé (3, 4),
**caractérisé en ce que**
en cas d'allumage en altitude lors d'une procédure d'allumage en altitude dans ledit au moins un moteur (2), seul du carburant gazeux est utilisé, une quantité minimale de carburant gazeux stockée dans le système de propulsion (11) étant utilisée pour la procédure d'allumage en altitude, **caractérisé en ce que**, en cas d'allumage en altitude, une vanne supplémentaire (8) est actionnée dans une conduite de carburant supplémentaire (10), par l'intermédiaire de laquelle une fraction de la quantité minimale de carburant gazeux nécessaire à la procédure d'allumage en altitude du moteur correspondant (2) est acheminée depuis un compartiment de réservoir supplémentaire (7) vers la chambre de combustion (6).

12. Procédé selon la revendication 11, **caractérisé en ce que**
la pression du carburant est réduite à un niveau de pression requis pour l'allumage en altitude par l'intermédiaire d'un dispositif de réduction de pression supplémentaire (9) interposé.
